## Europäisches Patentamt

(19) **European Patent Office**

**Office européen des brevets**

(11) Veröffentlichungsnummer: **0 053 268**
**A1**

## (12) EUROPÄISCHE PATENTANMELDUNG

(21) Anmeldenummer: **81108615.6**

(22) Anmeldetag: **21.10.81**

(51) Int. Cl.³: **H 01 M 10/04**, H 01 M 2/18

(30) Priorität: **03.12.80 DE 3045479**

(43) Veröffentlichungstag der Anmeldung: **09.06.82**
**Patentblatt 82/23**

(84) Benannte Vertragsstaaten: **AT FR SE**

(71) Anmelder: **VARTA Batterie Aktiengesellschaft, Am Leineufer 51, D-3000 Hannover 21 (DE)**

(72) Erfinder: **Werner, Harro, Ottersdorfer Strasse 34, D-7550 Rastatt (DE)**

(74) Vertreter: **Kaiser, Dieter Ralf, Dipl.-Ing. et al, Gundelhardtstrasse 72, D-6233 Kelkheim/Ts. (DE)**

(54) **Elektrischer Akkumulator.**

(57) Bei einem elektrischen Akkumulator läßt sich eine bessere Ausnutzung der Zellenbreite erzielen, wenn die über dem Umriß der Elektrodenplatten (1, 2) gewöhnlich überstehenden Ränder (5) der Separatoren (4) nahezu rechtwinklig abgebogen werden, wobei sie auch die Plattenkanten überdecken. Durch diese Maßnahme schrumpft der sonst in Kauf zu nehmende Abstand z des Plattenstapels von der Gehäusewand (8), entsprechend der Randbreite der Separatoren, auf den geringen Abstand z' zusammen. Die jalousieartigen Überlappungen der Separator-Ränder können durch Verschweißen fixiert werden. Ein derart separierter Plattenstapel läßt sich gut handhaben und bei der Montage leichter positionieren.

Reg.-Nr. HvP 102-EP    6233 Kelkheim, den 14.10.1981
EAP-Dr.Ns/sd


VARTA Batterie Aktiengesellschaft
3000 Hannover 21, Am Leineufer 51

_____

## Elektrischer Akkumulator

Zur Trennung der Elektroden unterschiedlicher Polarität in galvanischen Elementen werden allgemein hochporöse Separatoren verwendet. Insbesondere bei Bleiakkumulatoren sind diese breiter und höher dimensioniert als die entsprechenden Elektrodenplatten. Der dadurch geschaffene Überstand soll beidseitig möglichst gleich sein und die Entstehung von Kurzschlüssen durch Elektrodenwachstum bzw. Auswachsen von leitfähigem Material verhindern. In zunehmendem Maße werden anstelle von einzelnen Separatoren aus einem entsprechenden, vorzugsweise auch verformbaren Material sogenannte Taschen gebildet, die im allgemeinen je eine Platte einer der beiden Elektrodenarten umschließen und nur oben offen sind.

Bei dieser Ausführung wäre zur Vermeidung von Kurzschlüssen kein seitlicher Überstand gegenüber der Elektrodenbreite mehr nötig, aber im allgemeinen werden die Separatortaschen aus Bandabschnitten gebildet, die im Bereich der Elektrodenunterkante gefältet sind und seitlich z.B. thermisch oder mittels Ultraschall verschweißt sind. Die auf diese Weise gebildeten seitlichen Nähte erfordern aber mindestens das gleiche Übermaß gegenüber der Plattenbreite wie die traditionell verwendeten Einzelseparatoren.

Eine der DE-PS 2 330 134 entnehmbare Elektrodenseparierung mittels einer Tasche zeigt dieses Problem besonders deutlich. Eine solche Umhüllung ist einerseits mit dem Nachteil verbunden, daß die lichte Zellenbreite der galvanischen Elemente nicht mit einer maximalen Elektrodenbreite genutzt werden kann. Andererseits erschweren die gegenüber den Elektroden breiteren Separatoren und Separatorentaschen die für eine einwandfreie Zellenmontage erforderliche gute zentrische Ausrichtung des gesamten Plattenblocks sowie dessen Beförderung und Positionierung. Diese Schwierigkeiten nehmen mit steigender Plattenzahl je Element und ebenso mit abnehmender Platten- sowie Separatoren-Dicke noch wesentlich zu.

Ein Separator, bei dem größere Überstände der Abdeckfolien über die Plattenränder vermieden werden, ist durch die DE-OS 2 454 824 bekannt geworden. Hierbei werden die nur geringfügig über den Elektrodenumriß übergreifenden Kanten der Abdeckfolien durch ein flaches, steifes Band miteinander verbunden und die Elektrodenränder wie von einer glatten Leiste abgeschlossen. Der Herstellungsprozess ist wegen des Aufbringens der Randleiste in Form einer erst allmählich aushärtenden Klebemasse jedoch aufwendig und zeitraubend.

Der Erfindung liegt daher die Aufgabe zugrunde, eine Separation insbesondere für Bleiakkumulatoren anzugeben, welche eine bessere Ausnutzung der Zellenbreite durch die Elektrodenplatten erlaubt und andererseits die exakte Beschickung der Zelle mit dem Elektrodenstapel nicht erschwert, welche ferner eine zuverlässige Isolierung auch der seitlichen Plattenkanten gewährleistet und deren Herstellungsaufwand bei einer Massenfertiggung nicht hinderlich ist.

Erfindungsgemäß wird diese Aufgabe dadurch gelöst, daß die seitlich überstehenden Randstreifen des Separators abgewinkelt sind und daß der Randstreifen mindestens die Kante jeder Elektrode abdeckt.

Besonders vorteilhaft im Hinblick auf eine vollständige Abdeckung auch der Elektrodenränder ist es, wenn das verwendete Separatorenmaterial ein thermoplastischer Kunststoff ist, weil dieser ein Verschweißen oder Verkleben der Randstreifen miteinander gestattet.

Aber auch ein weniger gut formbares Kunststoffmaterial ist der erfindungsgemäßen Separation zugänglich. Derartige Einzelseparatoren aus z.B. Hart-PVC können erfindungsgemäß anstelle der überstehenden Randstreifen mit Profilstreifen aus gut formbarem Material, beispielsweise Weich-PVC versehen werden. Die Abwinkelung des Randstreifens, der möglichst um mehr als 60°, maximal bis zu 90° parallel zu den Elektrodenseiten umgebogen werden soll, ist dann bereits vorweggenommen.

Bei Separatorentaschen, die ebenfalls anstelle von Einzelseparatoren verwendet werden können und jeweils eine Einzelplatte der einen oder der anderen Elektrodenpolarität enthalten, liegt naturgemäß ein thermoplastisch formbares Material vor. Bei ihrer Bildung durch seitliche Verschweißung der Ränder ist es vorteilhaft, diesen Vorgang durch entpsrechende Ausbildung der Schweißvorrichtung gleich so auszuführen, daß dadurch schon eine möglichst weitgehende Abwinkelung der Schweißränder erreicht wird.

In allen vorgenannten Fällen ergibt die Stapelung der Platten mit den zugehörigen Separatoren ein Elektrodenpaket, dessen Ausrichtung von Elektrode zu Elektrode durch die hochstehenden Ränder der zwischengeschichteten Separatoren außerordentlich begünstigt wird. Die Breite dieser Randstreifen bzw. das Maß des ursprünglich seitlichen Überstandes oder der bei Taschen vorhandenen Schweißnähte muß zwar der jeweiligen Zellenkonstruktion und der Montagemethode angepaßt sein, soll jedoch zumindest den Rand der Elektrode abdecken. Dabei überlappen sich alle Randstreifen jalousierartig an jeder Seite und es besteht die Möglichkeit, die hochgestellten Ränder des im allgemeinen sogar elastischen Separatormaterials direkt gegen die Plattenränder bzw. die Seitenflächen des Plattenpakets zu drücken. Ein derartig separierter Elektrodenstapel kann gut - sowohl manuell wie insbesondere maschinell - fest gegriffen, transportiert und positioniert werden, ohne daß die Ausrichtung wieder preisgegeben wird und durch zusätzliche Vorgänge wieder geschaffen werden muß. Dieser Vorteil wird erfindungsgemäß noch dadurch vergrößert, daß die seitlich an das Plattenpaket angedrückten Randstreifen miteinander verschweißt oder verklebt werden können.

Je nach Zellenkonstruktion muß unter Umständen noch durch Montagehilfen oder eine zusätzliche anschließende Umfaltung der hochstehenden Ränder des letzteren, obersten Separators bzw. der Separatorentaschen dafür gesorgt werden, daß diese bei der Batteriemontage nicht stören, wenn sie - hochgestellt - die Höhe des Plattenblocks über die verfügbare Zellenlänge hinaus vergrößern würden.

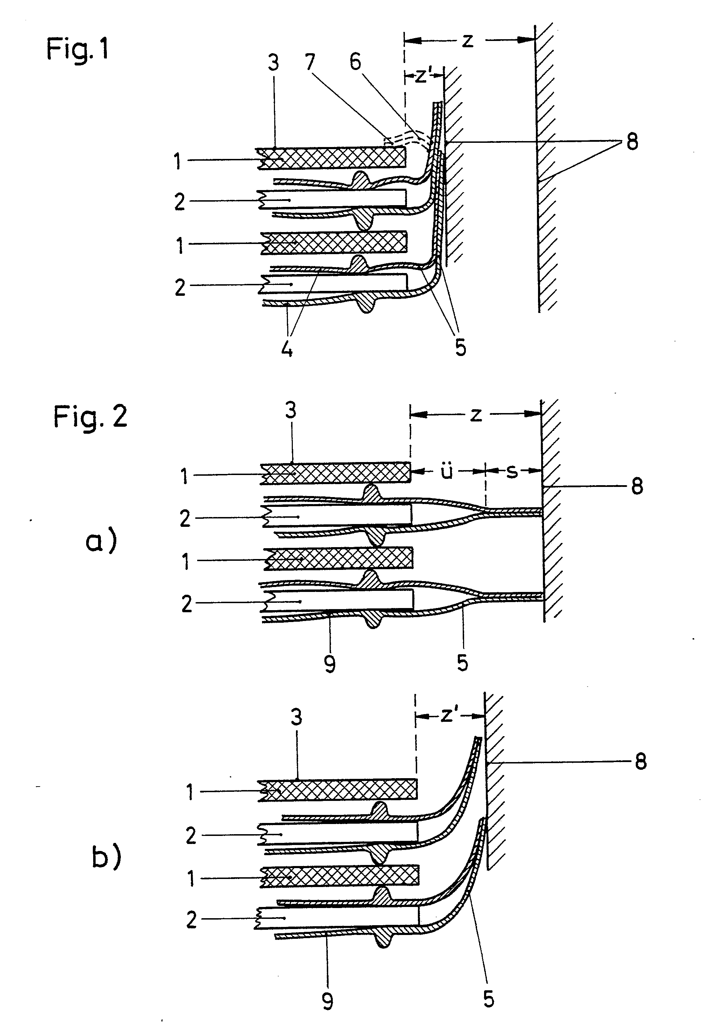

Der Erfindungsgegenstand wird anhand der Figuren 1 und 2 verdeutlicht.

Figur 1 zeigt zu einem Paket 3 zusammengestellte positive Elektrodenplatten 1 und negative Elektrodenplatten 2 mit zwischenliegenden Einzelseparatoren 4, deren seitlich überstehende Ränder 5 um annähernd 90° abgewinkelt und miteinander verschweißt sind. Eine zusätzliche Umfaltung 6 und Fixierung 7 ist an der endständigen Elektrode 1 erforderlich. Die bei herkömmlicher Separation vorhandene, unrationell genutzte Spanne z, welche der Breite des nicht abgewinkelten Randes 4 entspricht, schrumpft durch die erfindungsgemäße Maßnahme auf z' zusammen.

Figur 2 zeigt mit Teilfigur a) eine herkömmliche Taschen-Separation 9, bei welcher die Breite s der Schweißnähte und ein zusätzlicher Toleranz- und Übergangsbereich ü den Überstand 5 und damit die Spanne z bedingen.

Nach Teilfigur b) ergibt sich durch erfindungsgemäßes Verschweissen der Randüberstände 5 und Abwinkeln in einem Arbeitsschritt, eine verkleinerte Spanne z'.

## Patentansprüche

1. Elektrischer Akkumulator mit einem die Platten eines Elektrodenpakets voneinander isolierenden und über den Plattenumriß hinausstehenden porösen Separator, dadurch gekennzeichnet, daß die seitlich überstehenden Randstreifen des Separators abgewinkelt sind und daß der Randstreifen mindestens die Kante jeder Elektrode abdeckt.

2. Elektrischer Akkumulator nach Anspruch 1, dadurch gekennzeichnet, daß der Separator aus einem thermoplastischen Kunststoff besteht.

3. Elektrischer Akkumulator nach Anspruch 1, dadurch gekennzeichnet, daß die Randstreifen durch am Separatorenmaterial angebrachte Profilstreifen aus einem thermoplastischen Kunststoff gebildet sind.

4. Elektrischer Akkumulator nach den Ansprüchen 1 und 2, dadurch gekennzeichnet, daß die Separatoren Taschen zur Aufnahme von Einzelplatten der einen oder anderen Elektrodenpolarität sind, deren seitliche Ränderstreifen abgewinkelt sind.

5. Elektrischer Akkumulator nach einem der Ansprüche 1 bis 4, dadurch gekennzeichnet, daß sich die abgwinkelten Randstreifen der Separation überlappen.

6. Elektrischer Akkumulator nach einem der Ansprüche 1 bis 5, dadurch gekennzeichnet, daß die Randstreifen längs ihrer Überlappung durch Schweißen oder Kleben formschlüssig verbunden sind.

7. Verfahren zur Herstellung eines elektrischen Akkumulators nach einem der Ansprüche 1 bis 6, dadurch gekennzeichnet, daß der über den Plattenumriß seitlich hinausstehende Randstreifen des Separatormaterials aus einem thermoplastischen Kunststoff abgewinkelt wird oder daß entsprechende Profilstreifen aus thermoplastischem Kunststoff an den Einzelseparatoren angebracht werden und daß die sich überlappenden Bereiche benachbarter Separatoren formschlüssig verschweißt oder verklebt werden.

8. Verfahren nach Anspruch 7, dadurch gekennzeichnet, daß die über den Plattenumriß seitlich hinausstehenden Randstreifen der Separatoren zu Taschen verschweißt und zugleich abgewinkelt werden.

Fig.1

Fig. 2

a)

b)

Europäisches Patentamt

**EUROPÄISCHER RECHERCHENBERICHT**

0053268

Nummer der Anmeldung

EP 81 10 8615

| | **EINSCHLÄGIGE DOKUMENTE** | | KLASSIFIKATION DER ANMELDUNG (Int. Cl.⁴) |
|---|---|---|---|
| Kategorie | Kennzeichnung des Dokuments mit Angabe, soweit erforderlich, der maßgeblichen Teile | betrifft Anspruch | H 01 M 10/04<br>H 01 M 2/18 |
| X/Y | FR - A - 832 939 (COMP. R. DES GLACES ET VERRES SPEC. DU NORD DE LA FRANCE)<br><br>* Zusammenfassung 1a,1e; Seite 2, Zeilen 50-70; Figuren 3-6 *<br>--- | 1,4 | |
| X | US - A - 1 772 549 (F.N. LLOYD)<br><br>* Figur 1, Seite 2, Zeilen 43-52 *<br>--- | 1,2,4 | |
| Y | WO - A - 80/00285 (WARRELL S. et al.)<br><br>* Patentansprüche 1,2,6; Seite 12, Zeile 21 bis Seite 13, Zeile 2; Figuren 1,2 und 7 *<br>& EP - A - 0 018 398<br>--- | 5-7 | RECHERCHIERTE SACHGEBIETE (Int. Cl.³)<br><br>H 01 M 2/18<br>2/14<br>10/12<br>10/14<br>10/16<br>10/04<br>10/02<br>10/34<br>10/28 |
| A | FR - A - 911 284 (L. JAFFRENNOU)<br><br>* Figur 5; Seite 2, Zeilen 3-7 *<br>--- | 1 | |
| A | GB - A - 540 591 (VARLEY DRY ACCUMULATORS)<br><br>* Figuren 3 und 4; Patentanspruch 8; Seite 4, Zeilen 113-119 *<br>--- | 1 | |
| A | US - A - 1 474 761 (T.A. CAMPBELL et al.)<br><br>* Figur 2; Seite 2, linke Spalte, Zeilen 31-52 *<br>--- | 1 | KATEGORIE DER GENANNTEN DOKUMENTE |

./..

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Den Haag | 19.03.1982 | D'HONDT |

EPA form 1503.1 06.78

Europäisches
Patentamt

**EUROPÄISCHER RECHERCHENBERICHT**

0053268

Nummer der Anmeldung

EP 81 10 8615

- 2 -

| Kategorie | Kennzeichnung des Dokuments mit Angabe, soweit erforderlich, der Maßgeblichen Teile | betrifft Anspruch |
|---|---|---|
| A | <u>DE - A - 380 047</u> (HAZELETT STORAGE BATTERY) | |
| | * Figuren 3,6; Seite 3, Zeilen 27-41, 82-99 * | 1 |
| | --- | |
| A | <u>FR - A - 1 189 318</u> (C. FULLER et al.) | |
| | * Zusammenfassung b,f * | 1 |
| | --- | |
| A | <u>FR - A - 2 235 497</u> (GRACE GmbH) | |
| | * Patentansprüche 1,2,12,13,15; Beispiel 1; Figur * | 1 |
| | & DE - A - 2 332 546 | |

**EINSCHLÄGIGE DOKUMENTE**

KLASSIFIKATION DER
ANMELDUNG (Int. Cl.³)

RECHERCHIERTE
SACHGEBIETE (Int. Cl.³)

EPA Form 1503.2    06.78